**Europäisches Patentamt**

**European Patent Office**

**Office européen des brevets**

(19)

(11) Veröffentlichungsnummer : **0 400 295 B1**

(12) **EUROPÄISCHE PATENTSCHRIFT**

(45) Veröffentlichungstag der Patentschrift :
03.03.93 Patentblatt 93/09

(21) Anmeldenummer : **90105867.7**

(22) Anmeldetag : **28.03.90**

(51) Int. Cl.⁵ : **B65G 47/28**, G11B 20/10

(30) Priorität : **02.06.89 DE 3918006**

(43) Veröffentlichungstag der Anmeldung :
**05.12.90 Patentblatt 90/49**

(45) Bekanntmachung des Hinweises auf die
Patenterteilung :
**03.03.93 Patentblatt 93/09**

(84) Benannte Vertragsstaaten :
**AT BE CH DE DK ES FR GB GR IT LI NL SE**

(56) Entgegenhaltungen :
**CH-A- 621 529**
**DE-A- 2 923 908**
**US-A- 3 680 678**

(54) **Vorrichtung zum Fördern und Vereinzeln von Gegenständen.**

(73) Patentinhaber : **4P Nicolaus Kempten GmbH**
**Ulmer Strasse 18**
**W-8960 Kempten (DE)**

(72) Erfinder : **Marceau, Daniel**
**29, rue J.B. Bailliére**
**F-60 000 Beauvais (FR)**

(74) Vertreter : **Hutzelmann, Gerhard et al**
**Duracher Strasse 22**
**W-8960 Kempten (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Fördern und Vereinzeln von Gegenständen, die in einer geschlossenen Reihe auf einem Förderband od.dgl. transportiert und zum Weiterbearbeiten auseinandergezogen werden.

Bei einer aus der Praxis bekannten Vorrichtung dieser Art sind seitlich neben dem Förderband Kettenförderer angeordnet, die mit zwischen die Gegenstände eingreifenden Nocken versehen sind und die mit unterschiedlichen Geschwindigkeiten laufen, wodurch die Gegenstände auseinandergezogen werden.

Diese Vorrichtung arbeitet zwar recht zuverlässig, ist aber wenig flexibel, da sie nur schwer auf unterschiedliche Anforderungen einstellbar ist. Darüber hinaus ist sie sehr aufwendig und damit störanfällig sowie verhältnismäßig teuer.

Eine vergleichbare Vereinzelungsvorrichtung der eingangs genannten Art ist außerdem aus der US-A-3.680.678 bekannt.

Der Erfindung liegt die Aufgabe zugrunde, eine Vorrichtung der genannten Art zu schaffen, die leicht auf unterschiedliche Betriebsbedingungen eingestellt werden kann und einen einfachen und damit funktionsicheren Aufbau aufweist.

Diese Aufgabe wird erfindungsgemäß dadurch gelöst, daß wenigstens zwei Sternräder in Transportrichtung hintereinander angeordnet sind, die mit den Gegenständen im Eingriff stehen und von denen zumindest das erste mit einer gegenüber dem Förderband geringeren Umfangsgeschwindigkeit angetrieben ist.

Durch diese geringere Umfangsgeschwindigkeit des ersten Sternrades gegenüber dem Förderband, werden die Gegenstände zurückgehalten. Sobald sie von diesem ersten Sternrad freigegeben sind bewegen sie sich mit der Geschwindigkeit des Förderbandes zum zweiten Sternrad, wodurch für den vorgesehenen Abstand zum nachfolgenden Gegenstand gesorgt ist.

Sehr vorteilhaft ist es dabei, wenn erfindungsgemäß das erste Sternrad mit dem letzten Gegenstand der geschlossenen Reihe und das zweite Sternrad mit den im Abstand abgezogenen Gegenständen im Eingriff steht.

Damit wird eine sichere Steuerung des Vereinzelns der Gegenstände erreicht.

Erfindungsgemäß weist das zweite Sternrad eine vom ersten Sternrad abweichend höhere Umfangsgeschwindigkeit auf, die gleich oder geringer als die Geschwindigkeit des Förderbandes sein kann.

Bei mehreren zu einer Einheit zusammenhängend zusammengefassten Gegenständen ist es erfindungsgemäß vorteilhaft, wenn das zweite Sternrad am Umfang hintereinanderliegende Einbuchtungen aufweist, die in ihrer Anzahl wenigstens der in einer Reihe liegenden Gegenstände einer Einheit entspricht, worauf ein Zwischensteg folgt, dessen Breite dem Abstand der einzeln abtransportierten Einheiten entspricht.

Durch diese Ausgestaltung wird ein exaktes Vereinzeln erzielt, was die nachfolgende Weiterbearbeitung wesentlich erleichtert.

Ebenfalls sehr vorteilhaft ist es, wenn erfindungsgemäß der Abstand zwischen den beiden Sternrädern verstellbar ist und entsprechend der Größe der zusammengefassten Einheiten eingestellt wird.

Damit ist die Vorrichtung sehr leicht auf die jeweils vorliegende Einheitsgröße einstellbar.

Sehr vorteilhaft ist es auch, wenn erfindungsgemäß jeweils zwei übereinander angeordnete Sternräder vorgesehen sind, die gleich ausgebildet und auf einer gemeinsamen Antriebswelle befestigt sind.

Damit ist es möglich zwei übereinander angeordnete Einheiten von Gegenständen gleichzeitig zu vereinzeln.

Erfindungsgemäß kann auch vorgesehen sein, daß das zweite Sternrad einen größeren Durchmesser aufweist als das erste.

Damit ist es verhältnismäßig einfach die Zwischenstege zwischen den Einbuchtungen vorzusehen.

In der Zeichnung ist die Erfindung anhand von vier Ausführungsbeispielen veranschaulicht. Dabei zeigen:

**Fig.1** eine schematisierte Ansicht einer Vorrichtung zum Vereinzeln von becherförmigen Gegenständen, die in zwei Reihen zu jeweils zwei Stück zusammengefasst sind, mit zwei hintereinander angeordneten Sternrädern

**Fig.2** eine weitere Ansicht der Vorrichtung gemäß Fig.1 mit sechs zu einer Einheit zusammengefassten becherförmigen Gegenständen, wobei die beiden Sternräder einen größeren Abstand voneinander haben,

**Fig.3** eine dritte Ansicht der gleichen Vorrichtung, mit Achter-Einheiten und noch weiter auseinandergefahrenen Sternrädern und

**Fig.4** eine Seitenansicht der Vorrichtung mit jeweils zwei übereinander gestapelten Achter-Einheiten und entsprechend jeweils zwei Sternrädern, die übereinander auf einer gemeinsamen Antriebswelle sitzen.

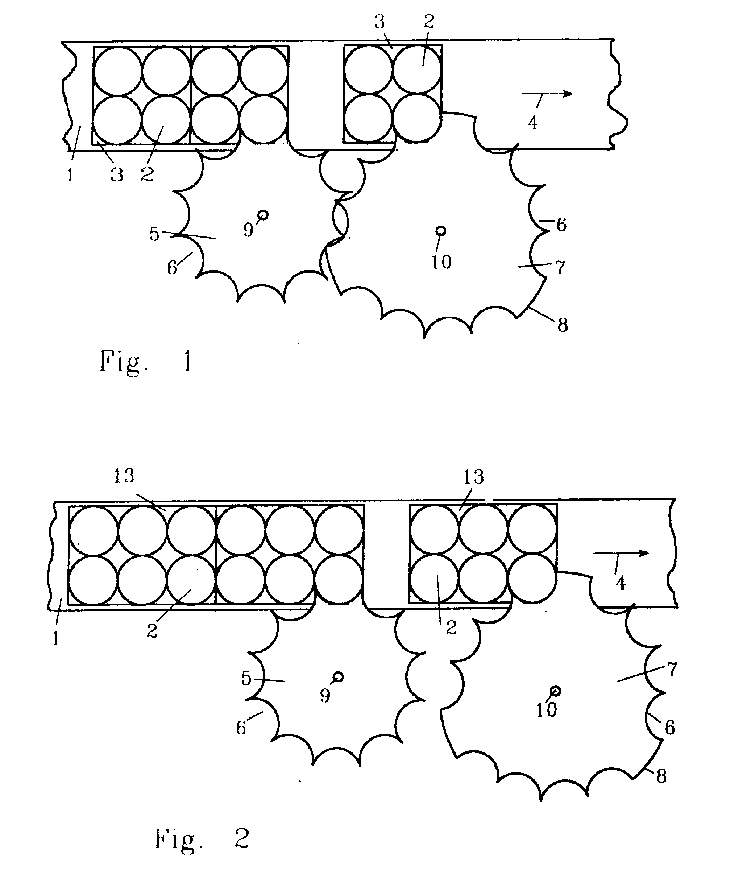

Mit 1 ist in Fig.1 ein Förderband bezeichnet, auf dem becherförmige Gegenstände 2 stehen, die zu Einheiten 3 von vier Stück in zwei Reihen zusammengefasst sind. Es handelt sich dabei um Joghurtbecher, die an ihren Siegelflanschen miteinander verbunden sind. Die Gegenstände 2 bewegen sich mit der Geschwindigkeit des Förderbandes 1 in Richtung des Pfeiles 4, bis der erste Gegenstand an einem ersten Sternrad 5 anliegt, dessen Umfangsgeschwindigkeit kleiner ist als die Geschwindigkeit des Förderbandes 1. Dieses Sternrad 5 dreht sich im Uhrzeigersinn und erfasst mit seinen Einbuchtungen 6 die Gegenstände der ihm zugekehrten Reihe nacheinander und hält sie gegenüber dem Förderband zurück. Nachdem beide hintereinanderliegenden Gegenstände einer Einheit zwei hintereinanderfolgende Einbuchtungen durchlaufen haben, gibt das Sternrad 5 die Einheit frei und diese kann sich wieder mit der Geschwindigkeit des Förderbandes 1 weiterbewegen, während nun die folgende Einheit vom Sternrad 5 abgebremst wird. Zwischen zwei aufeinanderfolgenden Einheiten 3 entsteht somit ein Abstand, der durch ein zweites Sternrad 7 begrenzt wird, gegen das der vordere Gegenstand 2 der vom ersten Sternrad freien Einheit läuft. Dieses zweite Sternrad 7 ist ebenfalls mit Einbuchtungen 6 versehen, von denen beim gezeigten Ausführungsbeispiel vier hintereinander am Umfang angeordnet sind. Danach folgt ein Zwischensteg 8, gegen dessen Flanke der erste Gegenstand läuft. Die Einheit 3 erhält somit eine Geschwindigkeit, die der Umfangsgeschwindigkeit des zweiten Sternrades entspricht und die nicht kleiner als die Umfangsgeschwindigkeit des ersten Sternrades sein darf, da sonst der gewonnene Abstand zwischen zwei aufeinanderfolgenden Einheiten wieder abgebaut würde. Die Umfangsgeschwindigkeit des zweiten Sternrades 7 kann maximal der Geschwindigkeit des Förderbandes 1 entsprechen.

Der Abstand zwischen den Drehachsen 9 und 10 der beiden Sternräder 5 und 6 ist in Fig.1 mit D für (Delta) bezeichnet und ist in Abhängigkeit von der Länge der zu vereinzelnen Einheiten veränderbar. Er sollte dabei nicht kleiner sein als die Gesamtlänge der Einheit, die sich ergibt aus der Anzahl f der hintereinander angeordneten Gegenstände multipliziert mit deren Durchmesser d und der Breite e des Zwischensteges. Für das gezeigte Beispiel bedeutet das,

$$D \geqq f \times d + e = 2d + e$$

Beim Ausführungsbeispiel nach Fig.2 sind drei Gegenstände 2 in einer Sechser-Einheit 13 hintereinander angeordnet. Dadurch ergibt sich für den Abstand

$$D \geqq 3d + e$$

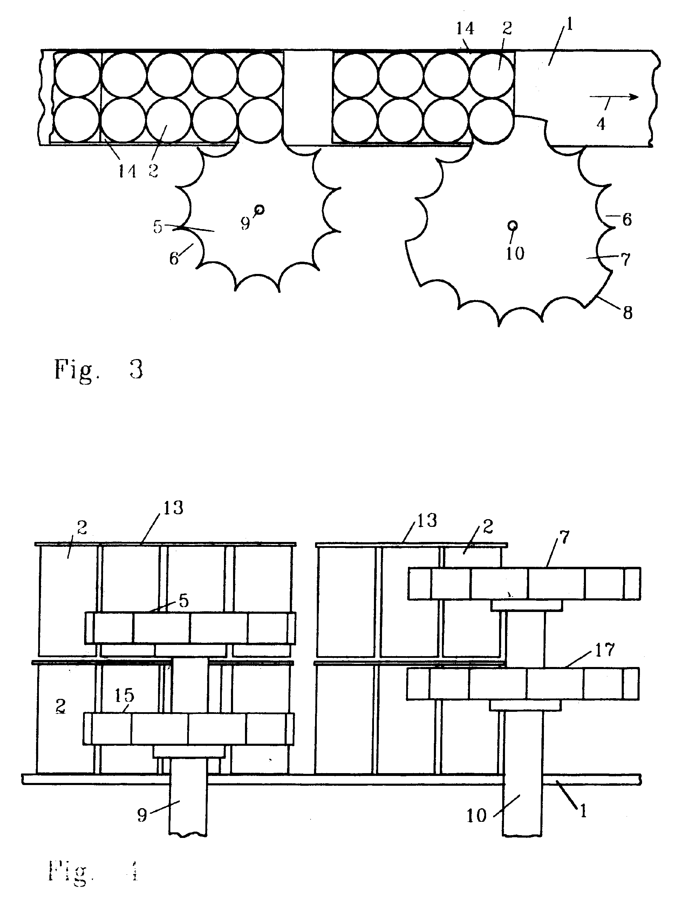

Wie Fig. 3 zeigt können auch Achter-Einheiten 14, mit vier hintereinander angeordneten Gegenständen 2 auf dieser Vorrichtung vereinzelt werden. Dazu muß lediglich der Abstand der beiden Sternräder 5,7 auf das Maß

$$D \geqq 4d + e$$

eingestellt werden.

Im Ausführungsbeispiel nach Fig.4 ist eine Vorrichtung dargestellt, bei der jeweils zwei Sternräder 5,15 bzw. 7,17 übereinander auf einer gemeinsamen Antriebswelle befestigt sind. Die beiden übereinander vorgesehenen Sternräder greifen jeweils an Gegenständen an, die ebenfalls übereinander angeordnet sind, wobei die oberen auf den unteren und diese auf dem Förderband 1 aufstehen. Damit können auch doppelstöckige Anordnungen einfach und effektvoll vereinzelt werden.

**Patentansprüche**

1.  Vorrichtung zum Fördern und Vereinzeln von Gegenständen, die in einer geschlossenen Reihe (3,13,14) auf einem Förderband (1) od.dgl. transportiert und zum Weiterbearbeiten auseinandergezogen werden, **dadurch gekennzeichnet,** daß wenigstens zwei Sternräder(5,7) in Transportrichtung hintereinander angeordnet sind, die mit den Gegenständen(2) im Eingriff stehen und von denen zumindest das erste(5) mit einer gegenüber dem Förderband(1) geringeren Umfangsgeschwindigkeit angetrieben ist.

2.  Vorrichtung nach Anspruch 1, **dadurch gekennzeichnet,** daß das erste Sternrad(5) mit dem letzten Gegenstand(2) der geschlossenen Reihe und das zweite Sternrad(7) mit den im Abstand abgezogenen Gegenständen im Eingriff steht.

3.  Vorrichtung nach Anspruch 1 od. 2, **dadurch gekennzeichnet,** daß das zweite Sternrad(7) eine vom ersten Sternrad (5) abweichende höhere Umfangsgeschwindigkeit aufweist, die gleich oder geringer als die Geschwindigkeit des Förderbandes(1) ist.

4.  Vorrichtung nach Anspruch 1, 2 od. 3, mit mehreren zu einer Einheit(3,13,14) zusammenhängend zusammengefassten Gegenständen(2), **dadurch gekennzeichnet,** daß das zweite Sternrad(7) am Umfang hintereinanderliegende Einbuchtungen(6) aufweist, die in ihrer Anzahl wenigstens der in einer Reihe liegenden Gegenstände(2) einer Einheit(3,13,14) entspricht, worauf ein Zwischensteg(8) folgt, dessen Breite(e) dem Abstand der einzeln abtransportierten Einheiten(3) entspricht.

5.  Vorrichtung nach einem der vorhergehenden Ansprüche, **dadurch gekennzeichnet,** daß der Abstand zwischen den beiden Sternrädern(5,7) verstellbar ist und entsprechend der Größe der zusammengefassten Einheiten(3,13,14) eingestellt wird.

6.  Vorrichtung nach einem der vorhergehenden Ansprüche, **dadurch gekennzeichnet,** daß jeweils zwei übereinander angeordnete Sternräder(3,13,14) vorgesehen sind, die gleich ausgebildet und auf einer gemeinsamen Antriebswelle(Drehachse 9,10) befestigt sind.

7.  Vorrichtung nach einem der vorhergehenden Ansprüche, **dadurch gekennzeichnet**, daß das zweite Sternrad(7) einen größeren Durchmesser und/oder eine höhere Umfangsgeschwindigkeit aufweist als das erste.

## Claims

1. Apparatus for transporting and separating objects that are transported in a continuous row (3, 13, 14) on a conveyor belt (1) or similar device and are separated for further processing, wherein at least two star wheels (5, 7) are located behind each other in transport direction and engage the objects (2), at least the first (5) of these wheels being driven with a slower speed than the conveyor belt (1).

2. Apparatus according to claim 1, wherein the first star wheel (5) engages the last object (2) in the continuous row and the second star wheel (7) engages the separated objects.

3. Apparatus according to claim 1 or 2, wherein the second star wheel (7) has a higher speed than the first star wheel (5), which can be the same as or lower than the speed of the conveyor belt (1).

4. Apparatus according to claim 1, 2 or 3 with several objects (2) collated to form a connected unit (3, 13, 14), wherein the perimeter of the second star wheel (7) is provided with at least as many recesses (6) located behind each other as the number of objects (2) arranged in a row per unit (3, 13, 14), after which a projecting section (8) is provided, the width (e) of which corresponds to the gap between the individually transported units (3).

5. Apparatus according to one of the previous claims, wherein the distance between the two star wheels (5, 7) can be adjusted and is set to correspond to the size of the collated units (3, 13, 14).

6. Apparatus according to one of the previous claims, wherein pairs of star wheels (5, 15 and 7,17) that are identical and are located on a common above shaft (centre of rotation 9, 10) are provided above each other.

7. Apparatus according to one of the previous claims, wherein the second star wheel (7) has a larger diameter and/or a higher speed than the first one.

## Revendications

1. Dispositif servant à déplacer et séparer des objets, disposés en ligne serrée (3, 13, 14) sur une bande transporteuse (1) ou organe analogue et que l'on sépare les uns des autres en vue d'un traitement ultérieur, caractérisé en ce qu'au moins deux roues en étoile (5, 7) disposées l'une derrière l'autre selon la direction du transport, sont en prise avec les objets (2), au moins la première roue (5) étant entraînée à une vitesse périphérique inférieure à la vitesse de la bande transporteuse (1).

2. Dispositif selon la revendication 1, caractérisé en ce que la première roue en étoile (5) est en prise avec le dernier objet (2) de la ligne serrée tandis que la deuxième roue en étoile (7) est en prise avec les objets avancés d'un certain intervalle par rapport à la ligne.

3. Dispositif selon la revendication 1 ou 2, caractérisé en ce que la seconde roue en étoile (7) a une vitesse supérieure à celle de la première roue en étoile (5), mais égale ou inférieure à la vitesse de la bande transporteuse (1).

4. Dispositif selon la revendication 1, 2 ou 3, appliqués à plusieurs objets (2) conditionnés en unités rassemblant plusieurs objets (3, 13, 14), caractérisé en ce que la seconde roue en étoile (7) présente des échancrures périphériques successives (6) dont le nombre est au moins égale à celui des objets (2) formant une ligne à l'intérieur de l'unité (3, 13, 14) et qui sont suivies d'une plage intermédiaire (8) dont la dimension correspond à l'intervalle entre les unités (3) transportées séparément.

5. Dispositif selon une des revendications précédentes, caractérisé en ce que la distance entre les deux roues en étoile (5, 7) peut varier et être réglée en fonction de la dimension des unités (3, 13, 14) groupées.

6. Dispositif selon une des revendications précédentes, caractérisé en ce qu'il est prévu de monter l'une au-dessus de l'autre, respectivement sur un arbre d'entraînement commun (axe de rotation 9, 10), deux roues en étoile identiques (3, 13, 14).

7. Dispositif selon une des revendications précédentes, caractérisé en ce que la seconde roue en étoile (7) a un diamètre et/ou une vitesse périphérique supérieure à celle de la première roue en étoile (5).

Fig. 1

Fig. 2

Fig. 3

Fig. 4